(19) Europäisches Patentamt / European Patent Office / Office européen des brevets

(11) **EP 4 170 544 A1**

(12) **EUROPEAN PATENT APPLICATION**
published in accordance with Art. 153(4) EPC

(43) Date of publication:
26.04.2023 Bulletin 2023/17

(21) Application number: 21832411.9

(22) Date of filing: 08.05.2021

(51) International Patent Classification (IPC):
*G06K 9/00* (2022.01)  *B60W 30/12* (2020.01)
*G01S 17/93* (2020.01)

(52) Cooperative Patent Classification (CPC):
B60W 30/12; G01S 7/48; G01S 17/93;
G01S 17/931; G06F 18/00

(86) International application number:
PCT/CN2021/092310

(87) International publication number:
WO 2022/001366 (06.01.2022 Gazette 2022/01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.07.2020 CN 202010632014

(71) Applicant: HUAWEI TECHNOLOGIES CO., LTD.
Shenzhen, Guangdong 518129 (CN)

(72) Inventors:
• **CAO, Tongtong**
  **Shenzhen, Guangdong 518129 (CN)**
• **LIU, Bingbing**
  **Shenzhen, Guangdong 518129 (CN)**
• **LI, Xiangxu**
  **Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **LANE LINE DETECTION METHOD AND APPARATUS**

(57) This application provides a method and apparatus for detecting a lane line in the field of artificial intelligence. The method includes: scanning a surrounding environment of a vehicle by using a LIDAR, to obtain lane line candidate reflection points and road edge information; establishing a road edge coordinate system based on the road edge information; extracting lane line reflection points from the lane line candidate reflection points based on coordinates of the lane line candidate reflection points in the road edge coordinate system; and obtaining a lane line based on the lane line reflection points. In this technical solution, the road edge coordinate system is established based on the road edge information, and the lane line reflection points are extracted from the road edge coordinate system, so that precision and stability of detecting a lane line can be improved.

FIG. 4

## Description

### TECHNICAL FIELD

This application relates to the field of automated driving, and more specifically, to a method and apparatus for detecting a lane line.

### BACKGROUND

Artificial intelligence (artificial intelligence, AI) is a theory, a method, a technology, and an application system that simulate, extend, and expand human intelligence by using a digital computer or a machine controlled by a digital computer, sense the environment, obtain knowledge, and use the knowledge to obtain a best result. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions. Researches in the field of artificial intelligence include robotics, natural language processing, computer vision, decision-making and inference, human-computer interaction, recommendation and search, basic theories of AI, and the like.

Automated driving is a mainstream application in the field of artificial intelligence. An automated driving technology relies on cooperation of computer vision, a radar, a monitoring apparatus, a global positioning system, and the like, so that a motor vehicle can implement automated driving without an active manual operation. An automated driving vehicle uses various computing systems to help transport a passenger from one location to another Some automated driving vehicles may require some initial inputs or continuous inputs from an operator (such as a pilot, a driver, or a passenger). An automated driving vehicle allows an operator to switch from a manual operation mode to an automated driving mode or allows a mode between the manual operation mode and the automated driving mode. Because the automated driving technology does not require a human to drive a motor vehicle, a driving error of a human can be effectively avoided theoretically, occurrence of traffic accidents can be reduced, and highway transportation efficiency can be improved. Therefore, the automated driving technology has received increasing attention.

In the field of automated driving, a vehicle needs to be positioned, to ensure that the vehicle does not deviate from the road. In various road signs, lane lines play an important reference role for ensuring precision of vehicle positioning. Therefore, precision of detecting a lane line directly affects whether the vehicle can be accurately positioned.

## SUMMARY

This application provides a method and apparatus for detecting a lane line, to improve precision and stability of detecting a lane line, thereby implementing accurate positioning of a vehicle.

According to a first aspect, a method for detecting a lane line is provided, including: scanning a surrounding environment of a vehicle by using a LIDAR, to obtain lane line candidate reflection points and road edge information; establishing a road edge coordinate system based on the road edge information; extracting lane line reflection points from the lane line candidate reflection points based on coordinates of the lane line candidate reflection points in the road edge coordinate system; and obtaining a lane line based on the lane line reflection points.

Because there is a specific association relationship between a road edge and the lane line, the road edge information is used as prior information, so that noise in the lane line candidate reflection points can be effectively filtered out, and precision and stability of detecting the lane line can be improved. In addition, regardless of whether an actual shape of the lane line is regular, distribution of the lane line reflection points in the road edge coordinate system is regular. Therefore, it is easier to extract the lane line reflection points from the road edge coordinate system.

With reference to the first aspect, in some implementations of the first aspect, before the extracting lane line reflection points from the lane line candidate reflection points based on coordinates of the lane line candidate reflection points in the road edge coordinate system, the method further includes: filtering out, from the lane line candidate reflection points, reflection points whose distances from a road edge are greater than a second threshold based on the road edge information.

Reflection points on the road edge have features similar to those of the lane line reflection points, that is, both the reflection points on the road edge and the lane line reflection points have strong reflection strength. Therefore, the reflection points on the road edge are usually included in the lane line candidate reflection points as noise. Before the lane line candidate reflection points are processed by using the road edge coordinate system, noise introduced by the road edge may be pre-filtered out based on a distance relationship between the road edge and the candidate reflection points, to improve efficiency of subsequent processing.

With reference to the first aspect, in some implementations of the first aspect, the road edge information includes information about two road edge lines, and the establishing a road edge coordinate system based on the road edge information includes: establishing the road edge coordinate system by using a longer edge line in the two road edge lines as a reference line.

The longer edge line is more reliable. When the road edge coordinate system is established by using the longer edge line as the reference line, a result of detecting the lane line is more reliable.

With reference to the first aspect, in some implementations of the first aspect, the road edge information includes information about two road edge lines, there is a difference between the two road edge lines, and the road edge coordinate system includes two coordinate systems that are established respectively by using the two road edge lines as reference lines.

When the difference between the two road edge lines is large, the lane line candidate reflection points are separately filtered by using the two coordinate systems, so that a lane line reflection point is not easily missed, and a result of detecting the lane line is more accurate.

With reference to the first aspect, in some implementations of the first aspect, the extracting lane line reflection points from the lane line candidate reflection points based on coordinates of the lane line candidate reflection points in the road edge coordinate system includes: determining features of the lane line candidate reflection points based on the coordinates of the lane line candidate reflection points in the road edge coordinate system; and extracting the lane line reflection points from the lane line candidate reflection points based on the features of the lane line candidate reflection points.

The features of the lane line candidate reflection points may include one or more of the following features: orientations of the lane line candidate reflection points, distances between the lane line candidate reflection points and the road edge, spacings between the lane line candidate reflection points, whether the lane line candidate reflection points can form a straight line, and the like.

With reference to the first aspect, in some implementations of the first aspect, the road edge information includes information about two road edge lines, and the establishing a road edge coordinate system based on the road edge information includes: establishing the road edge coordinate system by using a central line of the two road edge lines as a reference line.

With reference to the first aspect, in some implementations of the first aspect, the determining features of the lane line candidate reflection points based on the coordinates of the lane line candidate reflection points in the road edge coordinate system includes: performing feature detection through Hough transform based on the coordinates of the lane line candidate reflection points in the road edge coordinate system, to obtain a straight line; and the extracting the lane line reflection points from the lane line candidate reflection points based on the features of the lane line candidate reflection points includes: extracting, from the lane line candidate reflection points, reflection points whose distances from the straight line are less than a first threshold as the lane line reflection points.

With reference to the first aspect, in some implementations of the first aspect, the extracting lane line reflection points from the lane line candidate reflection points based on coordinates of the lane line candidate reflection points in the road edge coordinate system includes: clustering the lane line candidate reflection points based on the coordinates of the lane line candidate reflection points in the road edge coordinate system; and determining the lane line reflection points based on a clustering result.

According to a second aspect, an apparatus for detecting a lane line is provided, including modules configured to perform the detection method in the first aspect.

According to a third aspect, an apparatus for detecting lane line is provided, including: at least one processor; and a memory, in a signal connection to the at least one processor. The memory stores instructions executed by the at least one processor, and the instructions are executed by the at least one processor, to enable the at least one processor to perform the detection method in the first aspect.

According to a fourth aspect, a chip is provided, where the chip includes a processor and a data interface, and the processor reads, by using the data interface, instructions stored in a memory, to perform the method in the first aspect.

Optionally, in an implementation, the chip may further include the memory, the memory stores the instructions, the processor is configured to execute the instructions stored in the memory, and when the instructions are executed, the processor is configured to perform the method in the first aspect.

According to a fifth aspect, this application provides a computer-readable storage medium. The computer-readable storage medium stores instructions, and when the instructions are run on a computer, the computer is enabled to perform the method according to the first aspect.

According to a sixth aspect, a computer program product that includes instructions is provided. When the instructions are run on a computer, the computer is enabled to perform the method according to the first aspect.

According to a seventh aspect, a vehicle is provided. The vehicle includes the detection apparatus in the second aspect or the third aspect.

**BRIEF DESCRIPTION OF DRAWINGS**

FIG. 1 is a functional block diagram of a vehicle according to an embodiment of this application;
FIG. 2 is a schematic diagram of a structure of an automated driving system according to an embodiment of this application;
FIG. 3 is a schematic diagram of a specific structure of an environmental perception module 220 in FIG. 2;
FIG. 4 is a schematic flowchart of a method for detecting a lane line according to an embodiment of this application;
FIG. 5 is a schematic flowchart of a possible implementation of step S410 in FIG. 4;

FIG. 6 is a schematic diagram of distribution of lane line candidate reflection points in an ego-vehicle coordinate system;

FIG. 7 is a schematic diagram of distribution of lane line candidate reflection points in a road edge coordinate system;

FIG. 8 is a schematic flowchart of a possible implementation of step S430 in FIG. 4;

FIG. 9 is a schematic flowchart of another possible implementation of step S430 in FIG. 4;

FIG. 10 is a schematic flowchart of still another possible implementation of step S430 in FIG. 4;

FIG. 11 is a schematic diagram of a structure of an apparatus for detecting a lane line according to an embodiment of this application; and

FIG. 12 is a schematic diagram of a structure of an apparatus for detecting a lane line according to another embodiment of this application.

## DESCRIPTION OF EMBODIMENTS

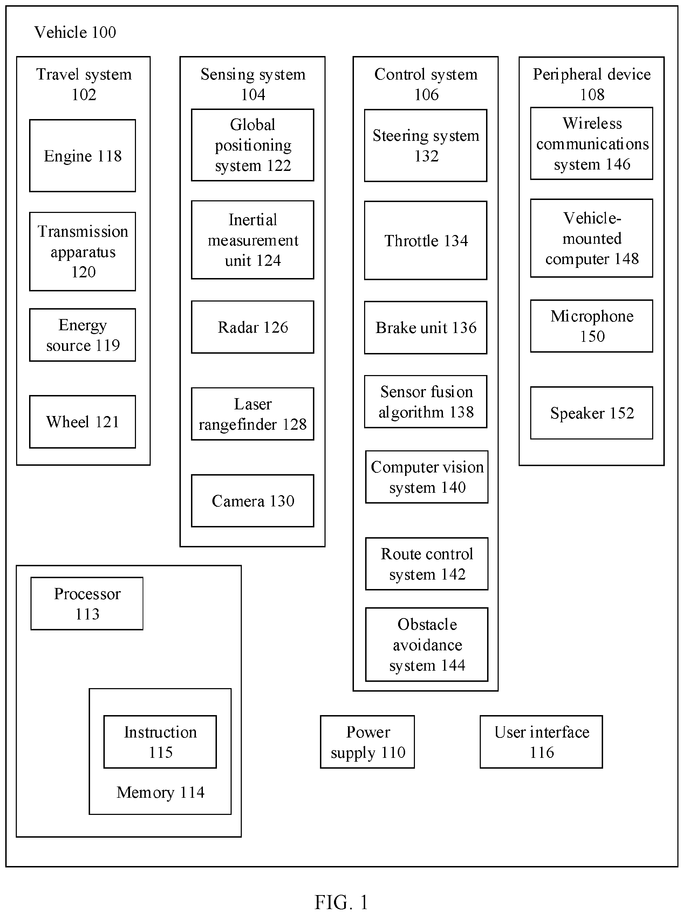

A method for detecting a lane line provided in this application may be applied to a vehicle having an automated driving function. With reference to FIG. 1, the following describes in detail a specific structure of the vehicle having the automated driving function.

FIG. 1 is a functional block diagram of a vehicle 100 according to an embodiment of this application. In an embodiment, the vehicle 100 is configured into a complete or partial automated driving mode. For example, the vehicle 100 in the automated driving mode may control the vehicle 100. A manual operation may be performed to determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on determined information. When the vehicle 100 is in the automated driving mode, the vehicle 100 may be set to operate when there is no interaction with a human.

The vehicle 100 may include various subsystems, for example, a travel system 102, a sensing system 104, a control system 106, one or more peripheral devices 108 and a power supply 110, a computer system 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

The travel system 102 may include a component providing power motion to the vehicle 100. In an embodiment, the travel system 102 may include an engine 118, an energy source 119, a transmission device 120, and a wheel (or tire) 121. The engine 118 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other petroleum-based fuel, propane, other compressed gas-based fuel, ethanol, a solar panel, a battery, and other power supply. The energy source 119 may also provide energy to other systems of the vehicle 100.

The transmission device 120 may transmit mechanical power from the engine 118 to the wheel 121. The transmission device 120 may include a gear box, a differential, and a drive shaft. In an embodiment, the transmission device 120 may further include other devices, such as a clutch. The drive axle may include one or more shafts that may be coupled to one or more wheels 121.

The sensing system 104 may include several sensors that sense information about a surrounding environment of the vehicle 100. For example, the sensing system 104 may include a global positioning system 122 (the global positioning system may be a GPS system, a Beidou system, or another positioning system), an inertial measurement unit (inertial measurement unit, IMU) 124, a radar 126, a laser rangefinder 128, and a camera 130. The sensing system 104 may further include sensors (for example, an in-vehicle air quality monitor, a fuel gauge, and an oil temperature gauge) of an internal system of the monitored vehicle 100. Sensor data from one or more of these sensors may be used for detecting an object and corresponding characteristics (a position, a shape, a direction, a speed, and the like) of the object. The detection object includes detection and identification of a road structure and other objects located on the road. The detection and identification are key functions of safe operation of the automated driving vehicle 100.

The positioning system 122 may be configured to estimate a geographic location of the vehicle 100. The IMU 124 is configured to sense changes in a position and a direction of the vehicle 100 based on inertial acceleration. In an embodiment, the IMU 124 may be a combination of an accelerometer and a gyroscope.

The radar 126 may sense an object in the surrounding environment of the vehicle 100 by using a radio signal. In some embodiments, in addition to sensing an object, the radar 126 may also be configured to sense a speed and/or an advancing direction of the object.

The laser rangefinder 128 may sense an object in an environment in which the vehicle 100 is located by using laser. In some embodiments, the laser rangefinder 128 may include one or more laser sources, a laser scanner, one or more detectors, and another system component.

The camera 130 may be configured to capture a plurality of images of the surrounding environment of the vehicle 100. The camera 130 may be a still camera or a video camera.

The control system 106 may be configured to control operations of both the vehicle 100 and the components of the vehicle 100. The control system 106 may include various elements, including a steering system 132, a throttle 134, a braking unit 136, a sensor fusion algorithm 138, a computer vision system 140, a route control system 142, and an obstacle avoidance system 144.

The steering system 132 may be configured to adjust an advancement direction of the vehicle 100. For example, in an embodiment, the steering system 132 may be a steering wheel system.

The throttle 134 is configured to: control an operating speed of the engine 118 and further control a speed of the vehicle 100.

The braking unit 136 is configured to control the vehicle 100 to decelerate. The braking unit 136 may use friction to slow down the rotation of the wheel 121. In another embodiment, the braking unit 136 may convert kinetic energy of the wheel 121 into an electric current. Alternatively, the braking unit 136 may slow down the rotation of the wheel 121 in another manner to control the speed of the vehicle 100.

The computer vision system 140 may be configured to process and analyze information such as images captured by the camera 130 and road information reflection points provided by the sensing system, to identify objects and/or features in the surrounding environment of the vehicle 100. The objects and/or features may include traffic signals, road boundaries, and obstacles. The computer vision system 140 may use an object recognition algorithm, a structure from motion (Structure from Motion, SFM) algorithm, video tracking, and other computer vision technologies. In some embodiments, the computer vision system 140 may be configured to draw a map for an environment, track an object, estimate a speed of an object, and the like.

The route control system 142 is configured to determine a travel route of the vehicle 100. In some embodiments, the route control system 142 may determine the travel route for the vehicle 100 with reference to data from the sensor fusion algorithm 138, the positioning system 122, and one or more predetermined maps.

The obstacle avoidance system 144 is configured to recognize, evaluate, and avoid or surmount, in other manners, potential obstacles in the environment of the vehicle 100.

Certainly, in an embodiment, the control system 106 may additionally or replaceably include components other than those shown and described in FIG. 1, or may not include some of the components shown in FIG. 1.

The vehicle 100 interacts with an external sensor, another vehicle, another computer system, or a user by using the peripheral device 108. The peripheral device 108 may include a wireless communications system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information to the user of the vehicle 100. The user interface 116 may also operate the vehicle-mounted computer 148 to receive a user input. The vehicle-mounted computer 148 may be operated by using a touchscreen. In other cases, the peripheral device 108 may provide a means for the vehicle 100 to communicate with other devices located in the vehicle. For example, the microphone 150 may receive audio (for example, a voice command or another audio input) from the user of vehicle 100. Similarly, the speaker 152 may output audio to the user of the vehicle 100.

The wireless communications system 146 may perform wireless communication with one or more devices directly or through a communications network. For example, the wireless communications system 146 may use 3G cellular communication such as CDMA, EVD0, or GSM/GPRS, use 4G cellular communication such as LTE, or use 5G cellular communication. The wireless communications system 146 may communicate with a wireless local area network (wireless local area network, WLAN) by using Wi-Fi. In some embodiments, the wireless communications system 146 may communicate directly with a device by using an infrared link, Bluetooth, or ZigBee. Other wireless protocols, such as various vehicle communications systems, for example, the wireless communications system 146 may include one or more dedicated short range communications (dedicated short range communications, DSRC) devices, which may include public and/or private data communication between vehicles and/or roadside stations.

The power supply 110 may provide power to various components of the vehicle 100. In an embodiment, the power supply 110 may be a rechargeable lithium-ion or lead-acid battery. One or more battery packs of such batteries may be configured to provide power to various components of the vehicle 100. In some embodiments, the power supply 110 and the energy source 119 may be implemented together, such as in some all-electric vehicles.

Some or all of the functions of the vehicle 100 are controlled by the computer system 112. The computer system 112 may include at least one processor 113. The processor 113 executes an instruction 115 stored in a non-transitory computer-readable medium such as a memory 114. The computer system 112 may alternatively be a plurality of computing devices that control individual components or subsystems of the vehicle 100 in a distributed manner.

The processor 113 may be any conventional processor, such as a commercially available CPU. Optionally, the processor may be a dedicated device such as an ASIC or another hardware-based processor. Although FIG. 1 functionally illustrates other elements of the processor, the memory, and the computer system 112 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer system 112. Therefore, a reference to a processor or a computer is understood to include a reference to a set of processors, computers, or memories that may or may not be operated in parallel. Different from using a single processor to perform the steps described herein, some components, such as a steering component and a deceleration component, may each have its own processor that performs only calculation related to component-specific functions.

In various aspects described herein, the processor may be located far away from the vehicle and perform wireless communication with the vehicle. In another aspect, some of processes described herein are performed on a processor arranged in the vehicle, while others are performed by a remote processor, including taking a necessary step to perform a single manipulation.

In some embodiments, the memory 114 may include the instruction 115 (for example, program logic), and the instruction 115 may be executed by the processor 113 to perform various functions of the vehicle 100, including the functions described above. The memory 114 may also include additional instructions, including instructions used to send data to, receive data from, interact with, and/or control one or more of the travel system 102, the sensing system 104, the control system 106, and the peripheral device 108.

In addition to the instruction 115, the memory 114 may further store data, such as a road map, route information, a location, a direction, a speed, and other vehicle data of the vehicle, and other information. Such information may be used by the vehicle 100 and the computer system 112 during operation of the vehicle 100 in autonomous, semi-autonomous, and/or manual modes.

For example, after the surrounding environment of the vehicle is scanned by using the radar 126, the memory 114 may store point cloud data formed by reflection points. The vehicle 100 or the computer system 112 may find lane line reflection points from point cloud, to determine a position of a lane line. Next, the vehicle 100 or the computer system 112 may position or control the vehicle 100 based on the lane line.

The user interface 116 is configured to provide information to or receive information from the user of the vehicle 100. Optionally, the user interface 116 may include one or more input/output devices in a set of peripheral devices 108, such as the wireless communications system 146, the vehicle-mounted computer 148, the microphone 150, and the speaker 152.

The computer system 112 may control the functions of the vehicle 100 based on inputs received from various subsystems (for example, the travel system 102, the sensing system 104, and the control system 106) and the user interface 116. For example, the computer system 112 may control, by using an input from the control system 106, the steering system 132 to avoid obstacles detected by the sensing system 104 and the obstacle avoidance system 144. In some embodiments, the computer system 112 is operable to provide control over many aspects of the vehicle 100 and the subsystems of the vehicle 100.

Optionally, one or more of these components may be mounted separate from the vehicle 100 or may be associated with the vehicle 100. For example, the memory 114 may exist partially or completely separate from the vehicle 100. The components may be communicatively coupled together in a wired and/or wireless manner.

Optionally, the foregoing components are merely an example. During actual application, components in the foregoing modules may be added or deleted based on an actual requirement. FIG. 1 should not be construed as a limitation on the embodiments of this application.

An automated driving vehicle traveling on a road, such as the foregoing vehicle 100, may recognize an object in the surrounding environment of the vehicle 100, to determine adjustment on a current speed. The object may be another vehicle, a traffic control device, or another type of object. In some examples, each recognized object may be considered independently, and based on respective characteristics of the object, such as a current speed of the object, an acceleration of the object, a distance from the vehicle, a speed to be obtained after adjustment by the automated driving vehicle may be determined.

Optionally, the automated driving vehicle 100 or a computing device (such as the computer system 112, the computer vision system 140, and the memory 114 in FIG. 1) associated with the automated driving vehicle 100 may predict behavior of the identified object based on the characteristic of the identified object and a status (for example, traffic, rain, or ice on a road) of the ambient environment. Optionally, each recognized object depends on the behavior of each other. Therefore, the behavior of a single recognized object may alternatively be predicted by considering all the recognized objects together. The vehicle 100 can adjust the speed of the vehicle 100 based on the predicted behavior of the recognized object. In other words, the automated driving vehicle can determine, based on the predicted behavior of the object, a specific stable state (for example, acceleration, deceleration, or stop) to which the vehicle needs to be adjusted. In this process, other factors may also be taken into account to determine the speed of the vehicle 100, such as a lateral position of the vehicle 100 in the road on which it travels (in a direction perpendicular to a road extending direction), a curvature of the road, proximity between static and dynamic objects, and the like.

In addition to providing an instruction for adjusting the speed of the automated driving vehicle, the computing device may further provide an instruction for modifying a steering angle of the vehicle 100, so that the automated driving vehicle can follow a given track and/or maintain a safe horizontal distance and a safe vertical distance from an object (for example, a car on a neighboring lane of the road) near the automated driving vehicle.

The vehicle 100 may be a car, a truck, a motorcycle, a bus, a boat, an airplane, a helicopter, a lawn mower, a recreational vehicle, a playground vehicle, a construction device, a tram, a golf cart, a train, a cart, or the like. This is not particularly limited in embodiments of this application.

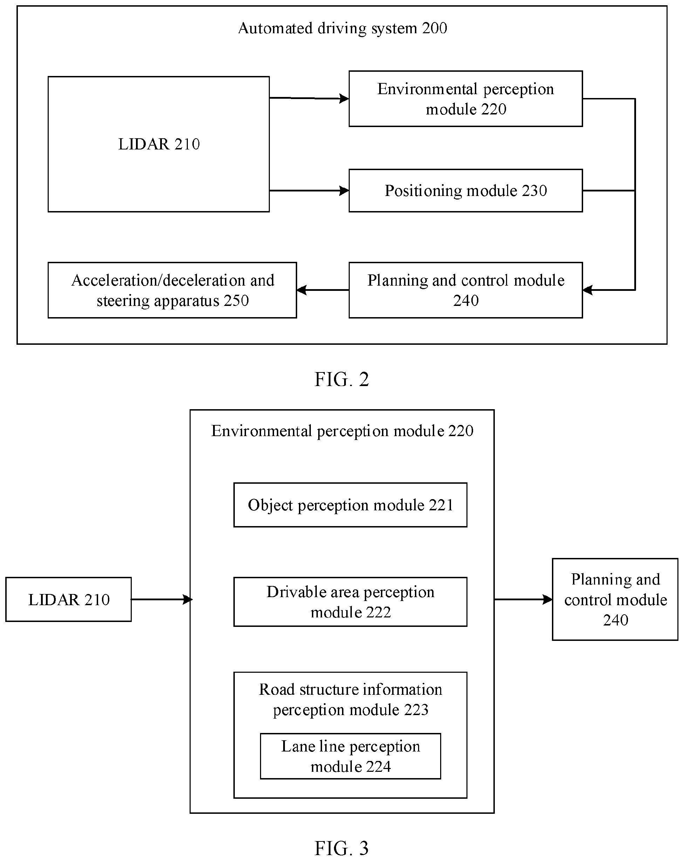

The method for detecting a lane line provided in this application may be applied to an automated driving system of a vehicle. The following describes the automated driving system in detail with reference to FIG. 2 and FIG. 3. It should be noted that, a LIDAR 210 in FIG. 2 and FIG. 3 may be a part of the sensing system 104 in FIG. 1, for example, may be a specific form of the radar 126 in FIG. 1. An environmental perception module 220, a positioning module 230, and a planning and control module 240 in FIG. 2 may be implemented by the control system 106 in FIG. 1, may be implemented by the computer system 112 in FIG. 1, or may be implemented by both. An acceleration/deceleration and steering apparatus 250 in FIG. 2 may be a part of the travel system 102.

As shown in FIG. 2, the LIDAR 210 (or referred to as a LIDAR sensor) may be configured to scan the surrounding environment of the vehicle. For example, the LIDAR may scan a road surface on which the vehicle travels. Then, the LIDAR 210 may transmit received scanning information to the environmental perception module 220 and the positioning module 230. The scanning information may include, for example, information about reflection points formed by reflecting, by an obstacle around the vehicle (such as a road surface or other vehicles), laser emitted by the LIDAR.

The positioning module 230 may process the scanning information to perceive a position, an orientation, and the like of the vehicle in the road.

As shown in FIG. 3, the environmental perception module 220 may include an object perception module 221, a drivable area perception module 222, and a road structure information perception module 223.

The object perception module 221 may detect information about other vehicles on the road based on the scanning information input by the LIDAR 210. For example, information that can reflect distances between vehicles may be detected.

The drivable area perception module 222 may detect information such as a traffic state of the road and a drivable area of the vehicle based on the scanning information input by the LIDAR 210.

The road structure information perception module 223 may detect a structure of the road based on the scanning information input by the LIDAR 210. The road structure information perception module 223 may include a lane line perception module 224. The lane line perception module 224 may process the scanning information to extract information about a lane line, thereby implementing perception on the lane line.

The planning and control module 240 may receive processing results of the environmental perception module 220 and the positioning module 230, and analyze the processing results, to control the acceleration/deceleration and steering apparatus 250. For example, the planning and control module 240 may perform accurate path planning based on information about a lane line perceived by the lane line perception module 224, and control a driving state of the vehicle by using the acceleration and steering apparatus 250.

It can be learned from the foregoing description that accurate detection of a lane line is of great significance for automated driving of vehicles. To detect a lane line, in the related technology, the surrounding environment of the vehicle is first scanned by using the LIDAR, and lane line candidate reflection points are extracted based on strength information of laser reflection points. Because the lane line candidate reflection points include a large amount of noise, after the lane line candidate reflection points are obtained, in the related technology, the noise in the lane line candidate reflection points is filtered out in a specific manner, to obtain lane line reflection points. A position of the lane line can then be determined based on the lane line reflection points.

However, in the related technology, when the lane line reflection points are extracted from the lane line candidate reflection points, road edge information is not fully used, and in the related technology, the lane line reflection points are mainly extracted from an ego-vehicle coordinate system. These all lead to insufficient accuracy and reliability of the extracted lane line reflection points.

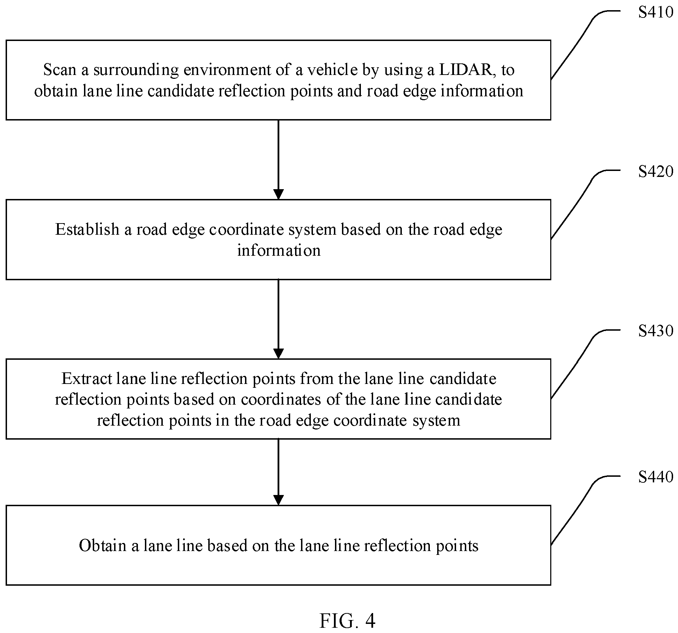

With reference to FIG. 4, the following describes in detail a method for detecting a lane line according to an embodiment of this application. The method for detecting a lane line provided in FIG. 4 may be applied to an automated driving system of a vehicle, for example, may be applied to the environmental perception module 220 of the automated driving system shown in FIG. 2. As shown in FIG. 4, the method includes steps S410 to S440. The following describes the steps in detail.

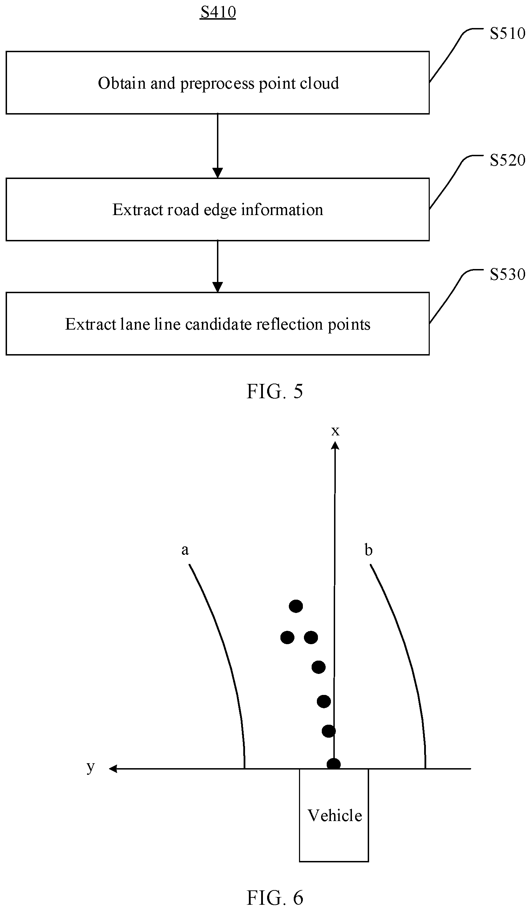

In step S410, a surrounding environment of a vehicle is scanned by using a LIDAR, to obtain lane line candidate reflection points and road edge information. For example, the surrounding environment of the vehicle is first scanned by using the LIDAR, and reflection points are obtained. Then, the lane line candidate reflection points and the road edge information may be obtained based on strength information of the reflection points and features of the reflection points and adjacent reflection points. For a specific implementation of step S410, refer to FIG. 5.

In step S420, a road edge coordinate system is established based on the road edge information. The road edge information may be information about road edge lines, for example, information such as positions and lengths of the road edge lines, and a difference between two road edge lines. The road edge coordinate system may be a two-dimensional rectangular coordinate system established by using the road edge line as a reference line, or may be a Frenet coordinate system. For example, the road edge coordinate system may be a coordinate system established by using the road edge line as an axis of the two-dimensional rectangular coordinate system.

In step S430, lane line reflection points are extracted from the lane line candidate reflection points based on coordinates of the lane line candidate reflection points in the road edge coordinate system. Before step S430 is performed, the lane line candidate reflection points may be first projected from a current coordinate system (for example, the ego-vehicle coordinate system) into the road edge coordinate system, and then the lane line candidate reflection points are processed in the road edge coordinate system.

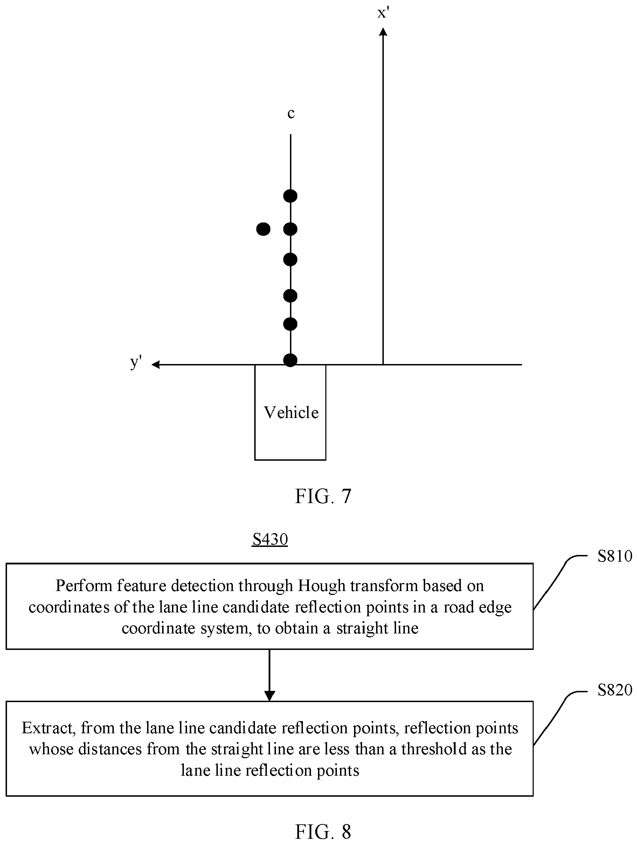

There may be a plurality of implementations of step S430. For example, features of the lane line candidate reflection points may be first determined based on the coordinates of the lane line candidate reflection points in the road edge coordinate system; and then the lane line reflection points are extracted from the lane line candidate reflection points based on the features of the lane line candidate reflection points. The features of the lane line candidate reflection points include one or more of the following features: orientations of the lane line candidate reflection points, distances between the lane line candidate reflection points and the road edge line, spacings between the lane line candidate reflection points, whether the lane line candidate reflection points can form a straight line, and the like. Alternatively, the lane line candidate reflection points may be clustered in the road edge coordinate system, and then the lane line reflection points are extracted from the lane line candidate reflection points based on a clustering result. FIG. 8 to FIG. 10 in the following provide several possible implementations of step S430.

In step S440, the lane line is obtained based on the lane line reflection points. For example, the lane line reflection points may be transformed into the ego-vehicle coordinate system, and then the lane line is fitted in the ego-vehicle coordinate system. After the lane line is obtained, the lane line may be directly output, or the lane line may be output after being tracked. Information about the lane line obtained in step S440 may be output to the planning and control module 240 shown in FIG. 2, for the planning and control module 240 to perform path planning and/or steering control of the vehicle.

Because there is a specific association relationship between a road edge and the lane line, the road edge information is used as prior information, so that noise in the lane line candidate reflection points can be effectively filtered out, and precision and stability of detecting the lane line can be improved. In addition, regardless of whether an actual shape of the lane line is regular, distribution of the lane line reflection points in the road edge coordinate system is regular. Therefore, it is easier to extract the lane line reflection points from the road edge coordinate system.

The following provides a possible implementation of step S410 with reference to FIG. 5. FIG. 5 includes step S510 to step S530. The following describes these steps in detail.

In step S510, point cloud is obtained and preprocessed.

There may be a plurality of manners of obtaining and preprocessing the point cloud. For example, in some embodiments, the LIDAR may be used to scan the surrounding environment by one or more layers, to obtain the point cloud formed by reflection points. Then, a ground model is established based on the point cloud, and some obvious noise is filtered out based on the ground model.

For example, the reflection points in the point cloud may be projected into two-dimensional grids, and lowest and highest heights of reflection points projected into each grid relative to the ground are calculated. If a height difference between the highest height and the lowest height is less than a threshold (for example, 0.1 m), the lowest height of the grid relative to the ground may be considered as a ground height of the grid. After ground heights of all the grids are determined, the ground model is established. Then, a height of each reflection point relative to the ground may be calculated based on the ground model, and reflection points whose heights relative to the ground exceed a threshold (for example, 2 m) are filtered out.

In step S520, the road edge information is extracted. For example, in some embodiments, road edge candidate reflection points may be extracted based on features of the reflection points and adjacent points in the point cloud. Then, noise in the road edge candidate reflection points may be removed to obtain road edge line reflection points. Next, the road edge lines may be detected based on the road edge line reflection points, to obtain the road edge information.

For example, the road edge information may be extracted by using the following steps.

Step a: Extract the road edge candidate reflection points from the point cloud. For example, the road edge candidate reflection points may be extracted based on the features of the reflection points and the adjacent reflection points. The features of the reflection points and the adjacent reflection points may include one or more of the following features: a height change, an angle change, a distance difference, and the like between the reflection points.

Step b: Cluster the road edge candidate reflection points, and filter out a cluster whose quantity of reflection points is less than a specific threshold.

Step c: Perform least square fitting on each cluster to form a fitted line. Then, a distance between each reflection point in the cluster and the fitted line may be calculated, and one or more reflection points with a largest distance or a large distance are removed from the cluster. In this way, precision of the fitted line can be improved, so that reliability of the subsequently extracted road edge information is improved.

Step d: Repeat step c until distances between all the reflection points in the road edge candidate reflection points and the corresponding fitted line are less than a specific threshold.

Step e: Output the fitted line as the road edge line.

In step S530, the lane line candidate reflection points are extracted. For example, in some embodiments, the lane line candidate reflection points may be extracted based on the features of the reflection points and the adjacent reflection points in the point cloud.

For example, the lane line candidate reflection points may be extracted by using the following steps.

Step a: For a reflection point, determine a height of the reflection point relative to the ground based on the ground model established in step S510, and if the height relative to the ground meets a threshold (for example, 0.1 m), proceed to step b; otherwise, select a next reflection point.

Step b: Select adjacent reflection points of the reflection point in a specific range, and calculate a maximum reflection strength $\varphi_{max}$ and a minimum reflection strength $\varphi_{min}$ of the reflection points in the specific range. For example, the reflection point and five reflection points on the left of the reflection point and five reflection points on the right of the reflection point, namely, a total of 11 reflection points may be selected, and the maximum reflection strength $\varphi_{max}$ and the minimum reflection strength $\varphi_{min}$ in the 11 reflection points are calculated.

Step c: Determine whether the reflection strength $\varphi$ of the reflection point meets $\varphi > \beta(\varphi_{max} - \varphi_{min}) + \varphi min$. $\beta$ is a preset threshold, for example, may be 0.9. If the foregoing condition is met, the reflection point is a lane line candidate reflection point; or if the condition is not met, a next reflection point is selected, and steps a to c are repeatedly performed until all the reflection points in the point cloud are traversed.

Refer to FIG. 4 again. The road edge coordinate system mentioned in step S420 may be established in a plurality of manners. The following provides detailed descriptions with reference to FIG. 6 and FIG. 7.

FIG. 6 is an ego-vehicle coordinate system established based on a position and an advancement direction of the vehicle. A positive direction of the x-axis is the advancement direction of the vehicle, and the y-axis is perpendicular to the advancement direction of the vehicle. In the ego-vehicle coordinate system shown in FIG. 6, two road edge lines are respectively road edge lines a and b, and both the road edge lines a and b are curves.

In some embodiments, the road edge coordinate system may be established by using the road edge line b in FIG. 6 as a reference line, and the established road edge coordinate system is shown in FIG. 7. In FIG. 7, the x' axis is the road edge line b. It can be learned from FIG. 7 that lane line candidate reflection points that are originally arranged in a curve are arranged in a straight line in FIG. 7. Therefore, it is easier to extract the lane line reflection points in the road edge coordinate system.

FIG. 7 is a road edge coordinate system established by using one of the two road edge lines as a reference line. When lengths of the two road edge lines are different, the road edge line used as the reference line may be a longer one of the two road edge lines. A real road edge line is usually long. Therefore, a probability that the longer road edge line is the real road edge line is higher, and the road edge coordinate system established by using the longer edge line as the reference line is more reliable.

In addition, in some embodiments, the road edge coordinate system may alternatively be established by using a central line of the two road edge lines as a reference line. Alternatively, in some embodiments, if a difference between the two road edge lines is large, two coordinate systems may be established respectively by using the two road edge lines as reference lines, and lane line reflection points filtered from the two coordinate systems are fused. When the difference between the two road edge lines is large, the lane line candidate reflection points are separately filtered by using the two coordinate systems, so that a lane line reflection point is not easily missed, and a result of detecting the lane line is more accurate.

Refer to FIG. 4 again. There may be a plurality of manners of extracting the lane line reflection points mentioned in step S430. With reference to FIG. 8 to FIG. 10, the following provides several possible implementations of step S430.

FIG. 8 is a schematic flowchart of a possible implementation of step S430 in FIG. 4. Steps of FIG. 8 include step S810 and step S820.

In step S810, feature detection is performed through Hough transform based on the coordinates of the lane line candidate reflection points in the road edge coordinate system, to obtain a straight line.

In the road edge coordinate system, a shape of the lane line presents a regular state, such as a straight line state. Therefore, the Hough transform may be used to find straight line features of the lane line candidate reflection points.

In step S820, reflection points whose distances from the straight line are less than a threshold are extracted from the lane line candidate reflection points as the lane line reflection points. The distances between the lane line candidate reflection points and the straight line may be distances between horizontal coordinates and/or vertical coordinates of the lane line candidate reflection points and the straight line.

With reference to FIG. 6 and FIG. 7, the following provides a specific implementation of the embodiment in FIG. 8.

As shown in FIG. 6, the road edge lines a and b are curves in an actual environment. The curves may be represented by using a quadratic or higher order polynomial function. For example, an expression of the road edge line a is $y=10+0.1x+0.01x^2$, and an expression of the other road edge line b is $y=-10+0.1x+0.01x^2$.

Assuming that coordinates of a lane line candidate reflection point in the ego-vehicle coordinate system (a unit of coordinate values may be m) are (x, y), in the road edge coordinate system shown in FIG. 7, the coordinates of the lane line candidate reflection point are converted into (x', y'). A numerical relationship between (x', y') and (x, y) meets:

$$x'=x$$

$$y'=y-(-10+0.1x+0.01x^2)$$

Assuming that coordinates of the lane line candidate reflection points in the coordinate system in FIG. 6 are as follows:

(x=0, y=0)
(x=10, y=2)
(x=20, y=6)
(x=30, y=12)
(x=40, y=20)
(x=40, y=23)
(x=50, y=30)

after the lane line candidate reflection points are projected into the road edge coordinate system of FIG. 7, the coordinates are as follows:

(x'=0, y'=10)
(x'=10, y'=10)
(x'=20, y'=10)
(x'=30, y'=10)
(x'=40, y'=10)
(x'=40, y'=13)
(x'=50, y'=10)

As shown in FIG. 7, in the road edge coordinate system, a straight line c is first found by using the Hough transform. End points of the straight line c are respectively (0, 10) and (50, 10).

Then, a distance from each lane line candidate reflection point to the straight line c is calculated. A point whose distance from the straight line c is less than a specific preset threshold (for example, 0.1 m) is marked as a lane line reflection point, and a reflection point that is far away from the straight line, such as a point (x'=40, y'=13) in FIG. 7, is removed. Finally, the lane line reflection points extracted from the lane line candidate reflection points are:

(x'=0, y'=10)
(x'=10, y'=10)
(x'=20, y'=10)
(x'=30, y'=10)
(x'=40, y'=10)
(x'=50, y'=10)

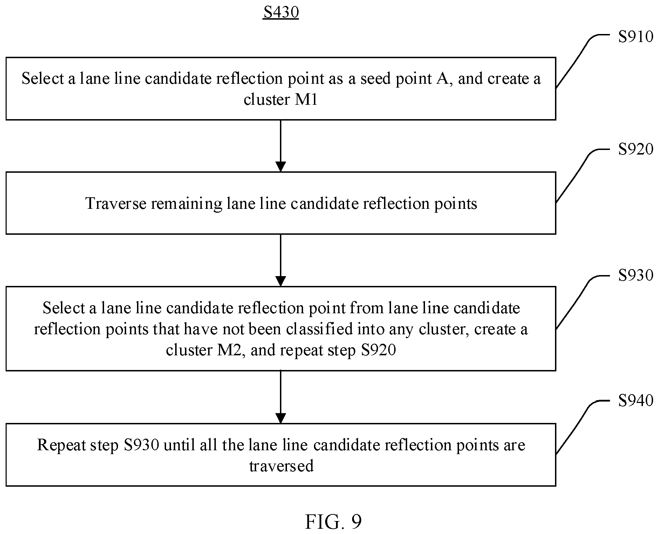

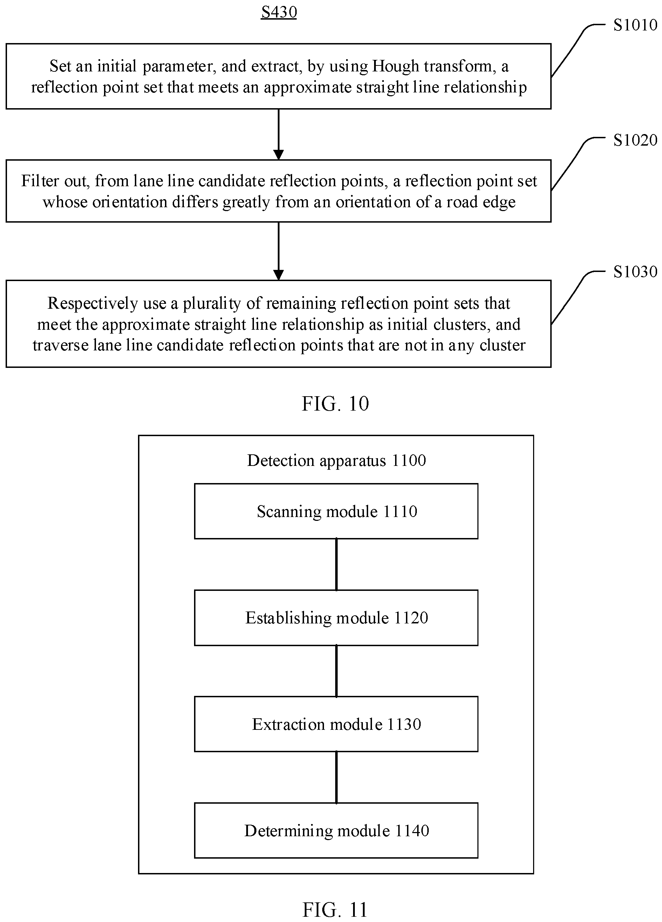

With reference to FIG. 8, how to extract the lane line reflection points in the road edge coordinate system by using the Hough transform is described in detail above. With reference to FIG. 9 and FIG. 10, the following describes in detail how to extract the lane line reflection points in a clustering manner in the road edge coordinate system.

FIG. 9 is a schematic flowchart of another possible implementation of step S430 in FIG. 4. FIG. 9 includes steps S910 to S940, which are specifically described as follows.

In step S910, a lane line candidate reflection point is selected as a seed point A, and a cluster M1 is created. A belongs to M1.

In step S920, remaining lane line candidate reflection points are traversed. For example, starting from a lane line candidate reflection point B, a relative lateral distance and/or a relative longitudinal distance between the candidate reflection point and the lane line candidate reflection point A in the cluster M1 are determined. If a preset lateral distance threshold and/or longitudinal distance threshold are met, the lane line candidate reflection point B is classified into the cluster M1. Continue to determine a next lane line candidate reflection point, for example, a lane line candidate reflection point C. The rest can be deduced by analogy.

In step S930, a lane line candidate reflection point is selected from lane line candidate reflection points that have not been classified into any cluster, a cluster M2 is created, and step S920 is repeated.

In step S940, step S930 is repeated until all the lane line candidate reflection points are traversed.

Finally obtained reflection points in the clusters are the lane line reflection points.

Optionally, in some embodiments, quadratic or cubic curve fitting may be performed on candidate reflection points in a cluster, to filter out, from the cluster, candidate reflection points whose lateral distance from a fitted curve is large.

Optionally, in some embodiments, a cluster with a small quantity of candidate reflection points may be filtered out, or a cluster with a small distribution distance in the x direction of the road edge coordinate system may be filtered out.

Optionally, in some embodiments, clusters may be filtered out or merged based on a lateral spacing between the clusters.

FIG. 10 is a schematic flowchart of still another possible implementation of step S430 in FIG. 4. FIG. 10 includes steps S 1010 to S 1040, which are specifically described as follows.

In step S1010, an initial parameter is set, and a reflection point set that meets an approximate straight line relationship is extracted by using the Hough transform. The initial parameter may include a quantity of points in the reflection point set, or a distance between adjacent points in the reflection point set.

In step S 1020, a reflection point set whose orientation differs greatly from an orientation of the road edge line is filtered out from the lane line candidate reflection points. Optionally, in some embodiments, a reflection point set with a large spacing from other reflection point sets may be deleted based on lateral spacings between the reflection point sets, or some reflection point sets with small spacings may be merged based on the lateral spacings between the reflection point sets.

In step S 1030, a plurality of remaining reflection point sets that meet the approximate straight line relationship are respectively used as initial clusters, and lane line candidate reflection points that are not in any cluster are traversed.

For example, for a lane line candidate reflection point C, relative lateral distances and/or relative longitudinal distance between the lane line candidate reflection point C and reflection points in all the initial clusters are determined (or, relative normal distances and relative tangential distances may alternatively be used to replace the relative lateral distances and/or the relative longitudinal distances). If the relative lateral distances and/or the relative longitudinal distances between the lane line candidate reflection point C and the reflection points in a cluster M1 in the initial clusters meet a specified lateral distance threshold and/or longitudinal distance threshold, a quantity of the points that are in the cluster M1 and that meet the specified lateral distance threshold and/or longitudinal distance threshold is further calculated. If the quantity of the reflection points in the cluster M1 meets a specified threshold, the point C may be classified into the cluster M1. The rest can be deduced by analogy.

Optionally, in some embodiments, in addition to traversing the lane line candidate reflection points, some other reflection points in the initially obtained point cloud, for example, reflection points close to the initial cluster, may be further traversed.

After the foregoing, finally obtained reflection points in the clusters are the lane line reflection points.

Refer to FIG. 4 again. In some embodiments, after the road edge information is obtained, reliability of the road edge information may be first determined. If the road edge information is reliable, the solution provided in this embodiment of this application may be used to extract the lane line reflection points from the road edge coordinate system. Otherwise, the lane line reflection points may be extracted from the ego-vehicle coordinate system. Whether the road edge information is reliable may be measured in a plurality of manners. For example, the reliability of the road edge information may be determined by determining whether the two road edge lines are sufficiently long, whether the difference between the two road edge lines is sufficiently small, or the like.

It should be noted that the scanning by using the LIDAR in step S410 may be single-frame scanning, or may be multi-frame scanning. When the road edge information or the lane line information is extracted by using a multi-frame scanning result of the LIDAR, accuracy of an extraction result can be improved.

The following describes apparatus embodiments of this application. Because the apparatus embodiments correspond to the method embodiments, for parts that are not described in detail, refer to the foregoing method embodiments.

FIG. 11 is a schematic diagram of a structure of an apparatus for detecting a lane line according to an embodiment of this application. As shown in FIG. 11, the detection apparatus 1100 includes a scanning module 1110, an establishing module 1120, an extraction module 1130, and a determining module 1140. The scanning module 1110 is configured to scan a surrounding environment of a vehicle by using a LIDAR, to obtain lane line candidate reflection points and road edge information. The establishing module 1120 is configured to establish a road edge coordinate system based on the road edge information. The extraction module 1130 is configured to extract lane line reflection points from the lane line candidate reflection points based on coordinates of the lane line candidate reflection points in the road edge coordinate system. The determining module 1140 is configured to obtain a lane line based on the lane line reflection points.

Optionally, in some embodiments, the extraction module 1130 may be configured to: determine features of the lane line candidate reflection points based on the coordinates of the lane line candidate reflection points in the road edge coordinate system; and extract the lane line reflection points from the lane line candidate reflection points based on the features of the lane line candidate reflection points.

Optionally, in some embodiments, the extraction module 1130 may be configured to: perform feature detection through Hough transform based on the coordinates of the lane line candidate reflection points in the road edge coordinate system, to obtain a straight line; and extract, from the lane line candidate reflection points, reflection points whose distances from the straight line are less than a first threshold as the lane line reflection points.

Optionally, in some embodiments, the extraction module 1130 may be configured to: cluster the lane line candidate reflection points based on the coordinates of the lane line candidate reflection points in the road edge coordinate system; and determine the lane line reflection points based on a clustering result.

Optionally, in some embodiments, the detection apparatus 1100 may further include: a filtering module, configured to: filter out, from the lane line candidate reflection points, reflection points whose distances from a road edge are greater than a second threshold based on the road edge information before the lane line reflection points are extracted from the lane line candidate reflection points based on the coordinates of the lane line candidate reflection points in the road edge coordinate system.

Optionally, in some embodiments, the road edge information includes information about two road edge lines, and the establishing module 1120 may be configured to establish the road edge coordinate system by using a longer edge line in the two road edge lines or a central line of the two road edge lines as a reference line.

Optionally, in some embodiments, the road edge information includes information about two road edge lines, there is a difference between the two road edge lines, and the road edge coordinate system includes two coordinate systems that are established respectively by using the two road edge lines as reference lines.

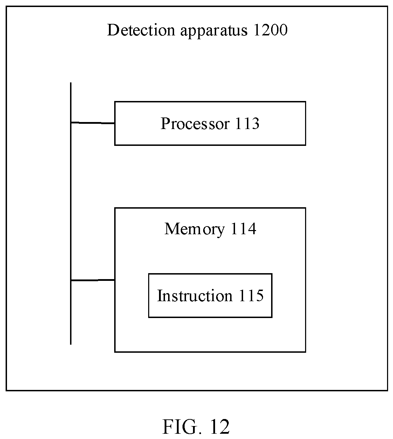

A detection apparatus provided in an embodiment of this application includes a memory and at least one processor. As shown in FIG. 12, the detection device 1200 may include the memory 114 and the at least one processor 113 that are shown in FIG. 1. The memory 114 is in a signal connection to the at least one processor 113. The memory 114 stores instructions 115 executed by the at least one processor 113, and the instructions 115 are executed by the at least one processor 113, to enable the at least one processor 113 to perform the foregoing method for detecting a lane line. For example, the processor and the memory may be connected to a bus, or the processor and the memory may be in a signal connection to another external device by using a bus.

For example, the detection device provided in this embodiment of this application may include at least one LIDAR and a processor. The LIDAR is configured to obtain point cloud data of a surrounding environment of a vehicle. The processor is configured to run a software program, and includes a LIDAR sensor driver, a LIDAR lane line perception module, and a lane line receiving module. The LIDAR sensor driver is configured to convert data sent by the LIDAR to the processor into three-dimensional point cloud data. The LIDAR lane line perception module includes an extraction module, and the extraction module is configured to extract a lane line based on road edge information (a road edge coordinate system). The lane line receiving module may be a fusion module, a planning and control module, or the like, and is configured to receive a lane line result. If multi-frame accumulation or tracking is required, an ego-vehicle motion information obtaining module is further required to provide ego-vehicle motion information. The ego-vehicle motion information may come from a positioning module or may be obtained by using a vehicle wheel speed meter, a steering wheel rotating angle, and the like.

For example, in some embodiments, the detection device may further include interfaces for connecting components. The interfaces may include a high speed interface and a low speed interface. The components may be interconnected by using different buses and may be mounted on a common main board or mounted in another manner based on a requirement. The processor 113 may process the instructions 115 executed within the detection device 1300, including graphical information instructions stored in the memory 114 or on the memory 114 for display on an external input/output apparatus (such as a display device coupled to an interface).

For example, in some embodiments, the detection device may be a digital computer in various forms and may be fastened in a vehicle. For example, the detection device is a laptop computer, a desktop computer, a workbench, a personal digital assistant, a server, a blade server, a mainframe computer, and other suitable computers. The detection device may alternatively be a mobile apparatus in various forms, and may be wirelessly connected to a vehicle signal. For example, the detection device is a personal digital assistant, a cellular phone, a smartphone, a wearable device, and other similar computing apparatuses.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, device, storage medium, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for detecting a lane line, comprising:

   scanning a surrounding environment of a vehicle by using a LIDAR, to obtain lane line candidate reflection points and road edge information;
   establishing a road edge coordinate system based on the road edge information;
   extracting lane line reflection points from the lane line candidate reflection points based on coordinates of the lane line candidate reflection points in the road edge coordinate system; and
   obtaining a lane line based on the lane line reflection points.

2. The detection method according to claim 1, wherein the extracting lane line reflection points from the lane line candidate reflection points based on coordinates of the lane line candidate reflection points in the road edge coordinate system comprises:

   determining features of the lane line candidate reflection points based on the coordinates of the lane line candidate reflection points in the road edge coordinate system; and
   extracting the lane line reflection points from the lane line candidate reflection points based on the features of the lane line candidate reflection points.

3. The detection method according to claim 2, wherein the determining features of the lane line candidate reflection points based on the coordinates of the lane line candidate reflection points in the road edge coordinate system comprises:

   performing feature detection through Hough transform based on the coordinates of the lane line candidate reflection points in the road edge coordinate system, to obtain a straight line; and
   the extracting the lane line reflection points from the lane line candidate reflection points based on the features of the lane line candidate reflection points comprises:

extracting, from the lane line candidate reflection points, reflection points whose distances from the straight line are less than a first threshold as the lane line reflection points.

4. The detection method according to claim 1, wherein the extracting lane line reflection points from the lane line candidate reflection points based on coordinates of the lane line candidate reflection points in the road edge coordinate system comprises:

   clustering the lane line candidate reflection points based on the coordinates of the lane line candidate reflection points in the road edge coordinate system; and
   determining the lane line reflection points based on a clustering result.

5. The detection method according to any one of claims 1 to 4, wherein before the extracting lane line reflection points from the lane line candidate reflection points based on coordinates of the lane line candidate reflection points in the road edge coordinate system, the method further comprises:
   filtering out, from the lane line candidate reflection points, reflection points whose distances from a road edge are greater than a second threshold based on the road edge information.

6. The detection method according to any one of claims 1 to 5, wherein the road edge information comprises information about two road edge lines, and
   the establishing a road edge coordinate system based on the road edge information comprises:
   establishing the road edge coordinate system by using a longer edge line in the two road edge lines or a central line of the two road edge lines as a reference line.

7. The detection method according to any one of claims 1 to 5, wherein the road edge information comprises information about two road edge lines, there is a difference between the two road edge lines, and the road edge coordinate system comprises two coordinate systems that are established respectively by using the two road edge lines as reference lines.

8. An apparatus for detecting a lane line, comprising:

   a scanning module, configured to scan a surrounding environment of a vehicle by using a LIDAR, to obtain lane line candidate reflection points and road edge information;
   an establishing module, configured to establish a road edge coordinate system based on the road edge information;

an extraction module, configured to extract lane line reflection points from the lane line candidate reflection points based on coordinates of the lane line candidate reflection points in the road edge coordinate system; and

a determining module, configured to obtain a lane line based on the lane line reflection points.

9. The detection apparatus according to claim 8, wherein the extraction module is configured to: determine features of the lane line candidate reflection points based on the coordinates of the lane line candidate reflection points in the road edge coordinate system; and extract the lane line reflection points from the lane line candidate reflection points based on the features of the lane line candidate reflection points.

10. The detection apparatus according to claim 9, wherein the extraction module is configured to: perform feature detection through Hough transform based on the coordinates of the lane line candidate reflection points in the road edge coordinate system, to obtain a straight line; and extract, from the lane line candidate reflection points, reflection points whose distances from the straight line are less than a first threshold as the lane line reflection points.

11. The detection apparatus according to claim 8, wherein the extraction module is configured to: cluster the lane line candidate reflection points based on the coordinates of the lane line candidate reflection points in the road edge coordinate system; and determine the lane line reflection points based on a clustering result.

12. The detection apparatus according to any one of claims 8 to 11, wherein the detection apparatus further comprises:

a filtering module, configured to: filter out, from the lane line candidate reflection points, reflection points whose distances from a road edge are greater than a second threshold based on the road edge information before the lane line reflection points are extracted from the lane line candidate reflection points based on the coordinates of the lane line candidate reflection points in the road edge coordinate system.

13. The detection apparatus according to any one of claims 8 to 12, wherein the road edge information comprises information about two road edge lines, and the establishing module is configured to establish the road edge coordinate system by using a longer edge line in the two road edge lines or a central line of the two road edge lines as a reference line.

14. The detection apparatus according to any one of claims 8 to 12, wherein the road edge information comprises information about two road edge lines, there is a difference between the two road edge lines, and the road edge coordinate system comprises two coordinate systems that are established respectively by using the two road edge lines as reference lines.

15. An apparatus for detecting a lane line, comprising:

at least one processor; and

a memory, in a signal connection to the at least one processor, wherein

the memory stores instructions executed by the at least one processor, and the instructions are executed by the at least one processor, to enable the at least one processor to perform the method for detecting a lane line according to any one of claims 1 to 7.

**Vehicle 100**

**Travel system 102**

Engine 118

Transmission apparatus 120

Energy source 119

Wheel 121

**Sensing system 104**

Global positioning system 122

Inertial measurement unit 124

Radar 126

Laser rangefinder 128

Camera 130

**Control system 106**

Steering system 132

Throttle 134

Brake unit 136

Sensor fusion algorithm 138

Computer vision system 140

Route control system 142

Obstacle avoidance system 144

**Peripheral device 108**

Wireless communications system 146

Vehicle-mounted computer 148

Microphone 150

Speaker 152

**Processor 113**

Instruction 115

Memory 114

Power supply 110

User interface 116

FIG. 1

Automated driving system 200

LIDAR 210

Environmental perception module 220

Positioning module 230

Acceleration/deceleration and steering apparatus 250

Planning and control module 240

FIG. 2

Environmental perception module 220

Object perception module 221

Drivable area perception module 222

Road structure information perception module 223

Lane line perception module 224

LIDAR 210

Planning and control module 240

FIG. 3

S410

Scan a surrounding environment of a vehicle by using a LIDAR, to obtain lane line candidate reflection points and road edge information

S420

Establish a road edge coordinate system based on the road edge information

S430

Extract lane line reflection points from the lane line candidate reflection points based on coordinates of the lane line candidate reflection points in the road edge coordinate system

S440

Obtain a lane line based on the lane line reflection points

FIG. 4

S410

Obtain and preprocess point cloud — S510

Extract road edge information — S520

Extract lane line candidate reflection points — S530

FIG. 5

FIG. 6

x'

c

y'

Vehicle

FIG. 7

S430

Perform feature detection through Hough transform based on coordinates of the lane line candidate reflection points in a road edge coordinate system, to obtain a straight line

S810

Extract, from the lane line candidate reflection points, reflection points whose distances from the straight line are less than a threshold as the lane line reflection points

S820

FIG. 8

S430

Select a lane line candidate reflection point as a seed point A, and create a cluster M1 ⟶ S910

↓

Traverse remaining lane line candidate reflection points ⟶ S920

↓

Select a lane line candidate reflection point from lane line candidate reflection points that have not been classified into any cluster, create a cluster M2, and repeat step S920 ⟶ S930

↓

Repeat step S930 until all the lane line candidate reflection points are traversed ⟶ S940

FIG. 9

S430

| |
|---|
| Set an initial parameter, and extract, by using Hough transform, a reflection point set that meets an approximate straight line relationship |

S1010

| |
|---|
| Filter out, from lane line candidate reflection points, a reflection point set whose orientation differs greatly from an orientation of a road edge |

S1020

| |
|---|
| Respectively use a plurality of remaining reflection point sets that meet the approximate straight line relationship as initial clusters, and traverse lane line candidate reflection points that are not in any cluster |

S1030

FIG. 10

| Detection apparatus 1100 |
|---|
| Scanning module 1110 |
| Establishing module 1120 |
| Extraction module 1130 |
| Determining module 1140 |

FIG. 11

Detection apparatus 1200

Processor 113

Memory 114

Instruction 115

FIG. 12

## INTERNATIONAL SEARCH REPORT

| International application No. |
| --- |
| **PCT/CN2021/092310** |

**A. CLASSIFICATION OF SUBJECT MATTER**

G06K 9/00(2006.01)i; B60W 30/12(2020.01)i; G01S 17/93(2020.01)i

According to International Patent Classification (IPC) or to both national classification and IPC

**B. FIELDS SEARCHED**

Minimum documentation searched (classification system followed by classification symbols)

G06K9/-,B60W30/-,G01S17/-

Documentation searched other than minimum documentation to the extent that such documents are included in the fields searched

Electronic data base consulted during the international search (name of data base and, where practicable, search terms used)

CNABS, CNTXT, CNKI: 华为, 曹彤彤, 刘冰冰, 李向旭, ((道路 or 公路 or 马路) 1w (边缘 or 边沿 or 边界)), 路沿, 路缘, 路肩, 路牙, 路边线, 坐标系, ((道路 or 车道 or 行车) 3w 线), 检测, 拟合, 识别, (坐标 s (转换 or 映射 or 变换 or 投影)), 道路坐标系, 行车坐标系, 车道坐标系, 距离, 激光雷达, 点云, 中心线, 中线, 中轴线; VEN, JPABS, USTXT, WOTXT, EPTXT, IEEE: (lane 3d (detect+ or recogni+)), ((boundary or border? or edge or curb?) s coordinat+), (coordinat+ s (transform+ or map+ or project+ or convert+)), (((central or center) 1w line) s coordinat+), distance, laser radar, lidar, (point 1w cloud?), 道路境界, 車線

**C. DOCUMENTS CONSIDERED TO BE RELEVANT**

| Category* | Citation of document, with indication, where appropriate, of the relevant passages | Relevant to claim No. |
| --- | --- | --- |
| A | WANG, YuFang et al. "A lane detection method based on 3D-LiDAR" *Automotive Research & Testing Center (ARTC)*, 31 December 2018 (2018-12-31), abstract, sections 2.1-2.3, 2.5, figure 6 | 1-15 |
| A | CN 109946708 A (BEIJING VANJEE TECHNOLOGY CO., LTD.) 28 June 2019 (2019-06-28) entire document | 1-15 |
| A | CN 111291603 A (CHANGSHA INTELLIGENT DRIVING INSTITUTE LTD.) 16 June 2020 (2020-06-16) entire document | 1-15 |
| A | CN 110361020 A (GREAT WALL MOTOR CO., LTD.) 22 October 2019 (2019-10-22) entire document | 1-15 |
| A | US 2017247029 A1 (TOYOTA MOTOR CO., LTD.) 31 August 2017 (2017-08-31) entire document | 1-15 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 July 2021** | **02 August 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/092310** |

### C. DOCUMENTS CONSIDERED TO BE RELEVANT

| Category* | Citation of document, with indication, where appropriate, of the relevant passages | Relevant to claim No. |
| --- | --- | --- |
| A | CN 109583280 A (BYD COMPANY LTD.) 05 April 2019 (2019-04-05)<br>entire document | 1-15 |
| A | DE 10327695 A1 (BOSCH GMBH ROBERT) 05 January 2005 (2005-01-05)<br>entire document | 1-15 |
| A | US 2015269446 A1 (TOYOTA JIDOSHA KABUSHIKI KAISHA) 24 September 2015 (2015-09-24)<br>entire document | 1-15 |
| A | US 6819779 B1 (COGNEX CORP.) 16 November 2004 (2004-11-16)<br>entire document | 1-15 |
| A | CN 102693645 A (DENSO CORPORATION) 26 September 2012 (2012-09-26)<br>entire document | 1-15 |
| A | CN 110287779 A (BAIDU ONLINE NETWORK TECHNOLOGY (BEIJING) CO., LTD.) 27 September 2019 (2019-09-27)<br>entire document | 1-15 |
| A | CN 102184535 A (NORTHWESTERN POLYTECHNICAL UNIVERSITY) 14 September 2011 (2011-09-14)<br>entire document | 1-15 |
| A | CN 110503009 A (HUAWEI TECHNOLOGIES CO., LTD.) 26 November 2019 (2019-11-26)<br>entire document | 1-15 |
| A | WIJESOMA, W.S. et al. . "Road-boundary detection and tracking using ladar sensing"<br>*IEEE Transactions on Robotics and Automation,* Vol. 20, No. 3, 07 June 2004 (2004-06-07),<br>entire document | 1-15 |
| A | FERNA´NDEZ, C. et al. "Road curb and lanes detection for autonomous driving on urban scenarios"<br>*2014 IEEE 17th International Conference on Intelligent Transportation Systems (ITSC),*<br>11 October 2014 (2014-10-11),<br>entire document | 1-15 |
| A | YE, ChengMing et al. "Semi-Automated Generation of Road Transition"<br>*IEEE TRANSACTIONS ON INTELLIGENT TRANSPORTATION SYSTEMS,*<br>Vol. 21, No. 5, 30 May 2020 (2020-05-30),<br>entire document | 1-15 |

INTERNATIONAL SEARCH REPORT
Information on patent family members

International application No.

**PCT/CN2021/092310**

| Patent document cited in search report | | | Publication date (day/month/year) | Patent family member(s) | | | Publication date (day/month/year) |
|---|---|---|---|---|---|---|---|
| CN | 109946708 | A | 28 June 2019 | None | | | |
| CN | 111291603 | A | 16 June 2020 | None | | | |
| CN | 110361020 | A | 22 October 2019 | CN | 110361020 | B | 23 March 2021 |
| US | 2017247029 | A1 | 31 August 2017 | US | 10384676 | B2 | 20 August 2019 |
| | | | | DE | 102017200768 | A1 | 31 August 2017 |
| | | | | JP | 2017151764 | A | 31 August 2017 |
| | | | | JP | 6323473 | B2 | 16 May 2018 |
| CN | 109583280 | A | 05 April 2019 | None | | | |
| DE | 10327695 | A1 | 05 January 2005 | None | | | |
| US | 2015269446 | A1 | 24 September 2015 | JP | 5989701 | B2 | 07 September 2016 |
| | | | | JP | 2015184900 | A | 22 October 2015 |
| | | | | EP | 2924657 | A1 | 30 September 2015 |
| | | | | CN | 104951817 | A | 30 September 2015 |
| | | | | CN | 104951817 | B | 25 September 2018 |
| | | | | US | 9607227 | B2 | 28 March 2017 |
| | | | | EP | 2924657 | B1 | 19 April 2017 |
| US | 6819779 | B1 | 16 November 2004 | None | | | |
| CN | 102693645 | A | 26 September 2012 | US | 2012271483 | A1 | 25 October 2012 |
| | | | | DE | 102012204441 | A1 | 27 September 2012 |
| | | | | US | 8781644 | B2 | 15 July 2014 |
| | | | | CN | 102693645 | B | 13 May 2015 |
| | | | | JP | 5321640 | B2 | 23 October 2013 |
| | | | | JP | 2012242935 | A | 10 December 2012 |
| | | | | JP | 2012198730 | A | 18 October 2012 |
| | | | | JP | 2012240480 | A | 10 December 2012 |
| | | | | JP | 2012242934 | A | 10 December 2012 |
| | | | | JP | 2012242937 | A | 10 December 2012 |
| | | | | JP | 5353946 | B2 | 27 November 2013 |
| | | | | JP | 5402983 | B2 | 29 January 2014 |
| | | | | JP | 2012242936 | A | 10 December 2012 |
| | | | | JP | 5327272 | B2 | 30 October 2013 |
| | | | | JP | 5402968 | B2 | 29 January 2014 |
| CN | 110287779 | A | 27 September 2019 | None | | | |
| CN | 102184535 | A | 14 September 2011 | CN | 102184535 | B | 14 August 2013 |
| CN | 110503009 | A | 26 November 2019 | None | | | |

Form PCT/ISA/210 (patent family annex) (January 2015)